# EUROPEAN PATENT APPLICATION

(11) **EP 3 582 102 A1**
(43) Date of publication of application: **18.12.2019**
(21) Application number: 19178587.2
(22) Date of filing: 05.06.2019
(51) Int. Cl.: G06F 8/65, G06Q 10/06

(54) **SYSTEM AND METHOD FOR INSTALLING LOADABLE SOFTWARE AIRPLANE PARTS (LSAP) OF A SET OF CERTIFIED ORCHESTRATED PROCEDURES USING A BLOCKCHAIN NETWORK**

(30) Priority: 14.06.2018 IN 201811022399; 29.11.2018 US 201816203812
(71) Applicant: Honeywell International Inc., Morris Plains, NJ New Jersey 07950 (US)
(72) Inventor: RAO, Sujay, Morris Plains, NJ New Jersey 07950 (US); KAR, Satyanarayan, Morris Plains, NJ New Jersey 07950 (US); SURACE, Lawrence, Morris Plains, NJ New Jersey 07950 (US)
(74) Representative: Lucas, Peter Lawrence

(57) **Abstract**

A computer-implemented blockchain system for distributing, updating and verifying the installation of software embedded in an aircraft and for creating a built-in blockchain record of distributing, updating and verifying activities as proofs, including: a first node to insert into the distributed ledger in a first block of the blockchain storing a service record that contains distributable software code for updating the software embedded in the aircraft, and that specifies rules prescribing activities for loading, installing and verifying the software; a second node programmed to access the distributed ledger to obtain the service record and to initiate loading and installing activity performed upon the software embedded in the aircraft and to insert into the distributed ledger a second block of the blockchain storing a service record of at least one loading, installing and verifying activity was performed; and a third node to access the distributed ledger to obtain the service record.

## Description

### TECHNICAL FIELD

Embodiments of the subject matter described herein relate generally to loadable software airplane parts, and more particularly, embodiments of the subject matter relate to a system and method for configuring a blockchain network for use with distributing, installing, updating, and validating software updates of aviation software components on an aircraft.

### BACKGROUND

Aircrafts are increasingly getting more connected to ground controllers and this may result more often in problems from LSAP installations used in aircraft connected systems. Despite the installing of the enhanced connected technologies, receiving automated software updates to aircrafts has not progressed sufficiently fast enough when compared with other counterpart platforms. For example, software updates are installed at faster rates in mobile phones in general when compared with aircraft systems. Hence, achieving a more robust solution for automated software updates in aircrafts would lower ongoing financial and accounting burdens in the aviation industry by enabling better integrity of the software systems on aircraft, reducing glitches in software systems of aircraft and allowing for an overall better flight performance.

The current solutions for automated software updates found in the consumer electronics industry for advanced robust remote software loading often prove to be inadequate solution for use in aircrafts due to various impediments systematic to the aerospace and defense industries. That is, both the aviation and aerospace industries are characterized by complex decentralized workflows which is distributed among multiple organizations and stringent regulatory requirements often due to the industry safety requirements. These characteristics can pose impediments and are often seen as a major challenge for realizing a fully/semi-automated loading of software parts or modules in an aircraft system; despite the fact that such aircraft systems are already connected to the ground or cloud based networks which can easily serve as the backbone for enabling such software updates. The result is that the current LSAP loading processes suffer from higher latency times which are time consuming as well as labor intensive when performing software updates.

Accordingly, it is desirable for improving both the performance and robustness of the LSAP loading process by using a fully/semi-automated set of certified activities for installing, updating, and validating software updates in an aircraft by use of a blockchain network. Furthermore, other desirable features and characteristics will become apparent from the subsequent detailed description and the appended claims, taken in conjunction with the accompanying drawings and the foregoing technical field and background.

### BRIEF SUMMARY

Some embodiments of the present disclosure provide a system and method for orchestrating activities of multiple entities or organizations to generate record of the activities performed for distributing, installing, updating and validating of LSAP software updates in an aircraft system.

In one embodiment, a computer-implemented blockchain based system for remotely distributing, updating and verifying the installation of loadable software in an aircraft and for creating a built-in trusted record of distributing, updating and verifying activities as proof is provided. The system includes: a data communication network having a plurality of nodes each node implemented by at least one computer programmed to cooperatively maintain a copy of a distributed ledger organized as a blockchain of linked encrypted record-storing blocks; at least a first one of said plurality of nodes being programmed to insert into the distributed ledger in a first block of the blockchain storing, as an automated workflow, a service record that contains (a) distributable software code for updating the software embedded in the aircraft, and that specifies (b) rules prescribing activities for loading and installing the software embedded in the aircraft, and (c) rules for verifying that the updated software conforms to a predefined or prescribed standard; at least a second one of said plurality of nodes being programmed (a) to access the distributed ledger to obtain the service record and to initiate at least one distributing , loading and installing activity performed upon the software embedded in the aircraft to effect updating thereof using the distributable software code and (b) to insert into the distributed ledger a second block of the blockchain storing a record of a fact that the at least one loading and installing activity was performed and the success thereof; at least a third one of said plurality of nodes being programmed (a) to access the distributed ledger to obtain the service record and to apply at least one verifying rule to test whether the updated software conforms to the predefined or prescribed standard and (b) to insert into the distributed ledger a third block of the blockchain storing a service record of the fact that the at least one verifying rule was applied and an outcome thereof; and at least the first, second and third ones of said plurality of nodes being programmed to collectively share immutable copies of the first, second and third blocks of the blockchain thereby ensuring that the distributed ledger is immutable.

In various embodiments, the computer-implemented blockchain system provides: the first, second and third nodes together control the installation of the software embedded in the aircraft in a manner to ensure no inadvertent activities are performed. The installation by the first, second and third nodes is controlled by a trusted workflow contract executed by an entity associated with at least one of the first, second or third nodes. The trusted workflow contract comprises: a set of rules for updating the software to: assess applicability of the software update for a particular aircraft; validate whether the software update is correctly loaded into the particular aircraft; and verify whether at a post load completion of the software update, the software complies with an approved software update loading procedure. The nodes are a plurality of entities comprising: a loadable software airplane part (LSAP) supplier, a carrier, a regulator, owner, and an aircraft. The computer-implemented blockchain system further includes: at least one activity of a plurality of activities stored in the record of the second block of actions performed by a plurality of clients in a pipeline processing defined by the approved software update loading procedure and associated with the plurality of nodes wherein the plurality of activities performed comprise one or more steps of: publishing a service bulletin, monitoring a fleet of aircrafts, creating a work order, monitoring a software update loading process, selecting and uploading a software update, verifying a software update, checking a compliance and viewing a logbook. The plurality of clients include one or more clients of: software part supplier, maintenance manager, maintenance technician, inspector, and a pilot. The one or more clients associated with the activities are remotely located from the entities associated with the nodes.

In another embodiment, a method for remotely updating and verifying software updates in an aircraft and for creating a built-in blockchain record of updating and verifying activities as proofs is provided. The method includes: configuring a data communication network having a plurality of nodes each node implemented by at least one computer programmed to cooperatively maintain a copy of a distributed ledger organized as a blockchain of linked encrypted record-storing blocks; programming at least a first one of said plurality of nodes to insert into the distributed ledger in a first block of the blockchain storing, as an automated workflow, a service record that contains (a) distributable software code for updating the software embedded in the vehicle, and that specifies (b) rules prescribing activities for loading and installing the software embedded in the aircraft, and (c) rules for verifying that the updated software conforms to a predefined or prescribed standard; programming at least a second one of said plurality of nodes (a) to access the distributed ledger to obtain the service record and to initiate at least one loading and installing activity performed upon the software embedded in the aircraft to effect updating thereof using the distributable software code and (b) to insert into the distributed ledger a second block of the blockchain storing a service record of the fact that the at least one loading and installing activity was performed and the success thereof; programming at least a third one of said plurality of nodes (a) to access the distributed ledger to obtain the service record and to apply at least one verifying rule to test whether the updated software conforms to the predefined or prescribed standard and (b) to insert into the distributed ledger a third block of the blockchain storing a service record of a fact that the at least one verifying rule was applied and an outcome thereof; and programming at least the first, second and third ones of said plurality to collectively share immutable copies of the first, second and third blocks of the blockchain thereby ensuring that the distributed ledger is immutable.

In various embodiments, the method includes: the first, second and third nodes together control the installation of the software embedded in the aircraft in a manner to ensure no inadvertent activities are performed. The installation by the first, second and third nodes is controlled by a trusted workflow contract executed by an entity associated with at least one of the first, second or third nodes. The trusted workflow contract includes: a set of rules for updating the software for: assessing applicability of the software update for a particular aircraft; validating whether the software update is correctly loaded into the particular aircraft; and verifying whether at a post load completion of the software update, the software complies with an approved software update loading procedure. The nodes are a plurality of entities including: a loadable software airplane part (LSAP) supplier, a carrier, a regulator, owner, and an aircraft. The method further includes: storing at least one activity of a plurality of activities in the second block service record of actions performed by a plurality of clients in a pipeline processing defined by the approved software update loading procedure and associated with the plurality of nodes wherein the plurality of activities performed include one or more steps of: publishing a service bulletin, monitoring a fleet of aircrafts, creating a work order, monitoring a software update loading process, selecting and uploading a software update, verifying a software update, checking a compliance and viewing a logbook. The plurality of clients include one or more clients of: software part supplier, maintenance manager, maintenance technician, inspector, and a pilot. The one or more clients associated with the activities are remotely located from the entities associated with the nodes.

In yet another embodiment, a method for executing instructions on a non-transitory computer-readable medium by at least one processor is provided. The method includes: configuring a data communication network having a plurality of nodes each node implemented by the at least one processor programmed to cooperatively maintain a copy of a distributed ledger organized as a blockchain of linked encrypted record-storing blocks; programming at least a first one processor of said plurality of nodes to insert into the distributed ledger in a first block of the blockchain storing, as an automated workflow, a service record that contains (a) distributable software code for updating the software embedded in an aircraft, and that specifies (b) rules prescribing activities for loading and installing the software embedded in the aircraft, and (c) rules for verifying that the updated software conforms to a predefined or prescribed standard; programming at least a second one processor of said plurality of nodes (a) to access the distributed ledger to obtain the service record and to initiate at least one loading and installing activity performed upon the software embedded in the aircraft to effect updating thereof using the distributable software code and (b) to insert into the distributed ledger a second block of the blockchain storing a service record of a fact that the at least one loading and installing activity was performed and the success thereof; programming at least a third one processor of said plurality of nodes (a) to access the distributed ledger to obtain the service record and to apply at least one verifying rule to test whether the updated software conforms to the predefined or prescribed standard and (b) to insert into the distributed ledger a third block of the blockchain storing a service record of a fact that the at least one verifying rule was applied and an outcome thereof; and programming at least the first, second and third one processors of said plurality of nodes to collectively share immutable copies of the first, second and third blocks of the blockchain thereby ensuring that the distributed ledger is immutable.

In various embodiments, the method includes: the first, second and third one processors of said plurality of nodes together control the installation of the software embedded in the aircraft in a manner to ensure no inadvertent activities are performed wherein the installation is controlled by a trusted workflow contract executed by an entity associated with at least one of the first, second or third nodes. The trusted workflow contract include: a set of rules for updating the software for: assessing applicability of the software update for a particular aircraft; validating whether the software update is correctly loaded into the particular aircraft; and verifying whether at a post load completion of the software update, the software complies with an approved software update loading procedure. The method further includes: storing at least one activity of a plurality of activities in the second block service record of actions performed by a plurality of clients in a pipeline processing defined by the approved software update loading procedure and associated with the plurality of nodes wherein the plurality of activities performed include one or more steps of: publishing a service bulletin, monitoring a fleet of aircrafts, creating a work order, monitoring a software update loading process, selecting and uploading a software update, verifying a software update, checking a compliance and viewing a logbook.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 illustrates an exemplary LSAP loading diagram of various orchestrating approved software loading procedure activities which may be used in generating data of the blockchain ledger of the LSAP blockchain network in accordance with an embodiment;
FIG. 2 illustrates a LSAP loading network diagram of the orchestrating activities of multiple organizations for generating data of the blockchain ledger of the LSAP blockchain network in accordance with an embodiment;
FIG. 3 illustrates a LSAP loading network with deployable trust-flow contracts representing an organization which has one or more nodes connected to end users interacting with the blockchain network via the nodes of the organization for generating data of the blockchain ledger of the LSAP blockchain network in accordance with an embodiment;
FIGS.4A and 4B illustrate a LSAP loading network with deployable contract of the orchestrating activities of multiple organizations for generating data of the blockchain ledger of the LSAP blockchain network in accordance with an embodiment;
FIG. 5 illustrates a LSAP loading network with a semi-automated installation procedure of the orchestrating activities of multiple organizations for generating data of the blockchain ledger of the LSAP blockchain network in accordance with an embodiment;
FIG. 6 illustrates a LSAP loading network with an automated installation procedure of the orchestrating activities of multiple organizations for generating data of the blockchain ledger of the LSAP blockchain network in accordance with an embodiment;
FIG. 7 illustrates a pipeline of distribution, installation and verification procedure of the orchestrating activities of multiple organizations for generating data of the blockchain ledger of the LSAP blockchain network in accordance with an embodiment;
FIG. 8 illustrates an LSAP loading architecture diagram of the parties and organizations orchestrating activities for generating data of the blockchain ledger of the LSAP blockchain network in accordance with an embodiment;
FIG. 9 illustrates a snapshot of an user interface of a service bulletin for sending to the parties and organizations orchestrating activities for generating data of the blockchain ledger of the LSAP blockchain network in accordance with an embodiment;
FIG. 10 illustrates a snapshot of a published service bulletin for sending to the parties and organizations orchestrating activities for generating data of the blockchain ledger of the LSAP blockchain network in accordance with an embodiment;
FIG. 11 illustrates a snapshot of an user interface of the service bulletin applicability for sending to the parties and organizations orchestrating activities for generating data of the blockchain ledger of the LSAP blockchain network in accordance with an embodiment;
FIG. 12 illustrates a snapshot of an user interface of the maintenance manager for creating the work order for sending to the parties and organizations of orchestrating activities for generating data of the blockchain ledger of the LSAP blockchain network in accordance with an embodiment;
FIG. 13 illustrates a snapshot of an user interface of the maintenance manager for monitoring the load progress and for sending to the parties and organizations orchestrating activities for generating data of the blockchain ledger of the LSAP blockchain network in accordance with an embodiment;
FIG. 14 illustrates a snapshot of an user interface of the maintenance technician for selecting and uploading the software part and, in instances, for sending to the parties and organizations orchestrating activities for a semi-automated workflow for generating data of the blockchain ledger of the LSAP blockchain network in accordance with an embodiment;
FIG. 15 illustrates a snapshot of an user interface of the maintenance inspector for verifying the uploading of the software part and, in instances, for sending to the parties and organizations orchestrating activities for a semi-automated workflow for generating data of the blockchain ledger of the LSAP blockchain network in accordance with an embodiment;
FIG. 16 illustrates a snapshot of an user interface of the inspector checking compliance of the software part and, in instances, for sending to the parties and organizations orchestrating activities for generating data of the blockchain ledger of the LSAP blockchain network in accordance with an embodiment;
FIG. 17 illustrates a snapshot of an user interface of the pilot viewing the log of the software part installed on the aircraft related to the orchestrated activities for generating data of the LSAP blockchain network in accordance with an embodiment;
FIG. 18 is a network diagram of the blockchain ledger with the communication network aircraft related to the orchestrated activities for generating data of the LSAP blockchain network in accordance with an embodiment; and
FIG. 19 is a functional block diagram of a computing device related to the client for the orchestrated activities for generating data of the LSAP blockchain network in accordance with an embodiment.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Loadable Software Airplane Parts (LSAP) is becoming an integral part of aircraft software system configuration. LSAP along with the relevant Hardware parts constitute the Loadable system whose functionality can be modified or changed by just updating the loadable software parts. The major advantage of this is as follows: airline carriers, owners, maintenance technician and others given appropriate access to onboard aviation systems are able to modify the configuration of these systems without physically modifying or replacing hardware components. This in turn can significantly reduce the number of LRU (Line replaceable unit) spares to be maintained in inventory by a carrier, manufacturer, owner etc. which results in cost savings and greater efficiencies in fixing problems and ease to carry out software changes and by reducing glitches that occur in complex systems. In addition, the software loading within the TAT (turnaround time)of the aircraft for the next flight is decreased.

For an airline to operate and maintain an aircraft having these loadable systems/software, in various exemplary examples, the following processes should be implemented which is not always achievable. Initially, a procurement of Loadable software parts and Loadable (LRU) is required which involves ordering loadable software Parts and relevant LRUs from an original equipment manufacturer (OEM) by listing out the software parts to be loaded into the LRU. Also needed are Software Libraries Management: airline operators require a well-established and maintained software library, for maintaining Loadable software parts spares and updated software as a part requiring a software changes can happen without notice. Also needed, is a preload Loadable Software Parts into Loadable LRU of the Aircraft: When a loadable LRU is replaced, the Loadable software certified for the Aircraft should be loaded into the incoming LRU. The operator can achieve this by requesting suppliers to perform the same or by performing in their own maintenance shops using shop loading equipment. Finally, a conformance of Loadable Software Configuration with Authorized Aircraft Configuration: This requires the operator maintain record of all the loadable software parts available in an Aircraft and its conformance with the approved Aircraft configuration. Such a process should also ensure that, all the changes undergone for loadable software parts arising out of the Service Bulletin are documented and readily available for any regularity authority inspections.

That said, the Airline Operator is the responsible entity for implementing procedures to control updates and modifications to loadable systems, occurring after the airplane has been delivered. The part numbers of the software loaded into a loadable system are part of the type certificate of the airplane. The operator must ensure that the configuration control documentation for each airplane reflects the current configuration of loadable software parts, and that the loadable software parts are certified for the airplane on which the updates are installed.

In various exemplary embodiments, the present disclosure describes a mechanism for intelligent automated software to perform loading software airplane parts as sub-tasks as per established workflow contractual rules, automated generation of records and management, and a secure process to prevent inadvertent and unauthorized updates of LSAPs on systems of the aircraft.

In various exemplary embodiments, the present disclosure describes a Certifiable Trusted Workflow Automation process and a process for a remote distribution , loading and installation of airplane software parts.

In various exemplary embodiments, the present disclosure describes: a private permissioned blockchain network, a set of configurable Network rules within the blockchain network to enable a set of deployable workflow contracts based on trusted elements like Service bulletins, a set of task transactions based on workflow contracts, which ensure that the secure loading of LSAPs from remote system takes place, and an automated tamper proof record generation of sub task.

The Table 1.0 below describes various benefits in exemplary embodiments described by converting written instruments of service bulletins to digital documents to facilitate the necessary software upgrades in aircrafts described by the service bulletins as well to maintain integrity with software updates when installed in the aircraft systems.

| Problem Area | Exemplary Embodiments Described |
|---|---|
| Service Bulletin comes as documents which are assimilated by Operator change management team. Assess applicability and constraints for their fleet. | SB is encoded as the executable code(smart contract) in the BC network. Assessment of the applicability is automatically determined by the network |
| Onboard Manual Software upgrades some of which take long time (sometimes >1 hour). Authorized Maintainers carry the software parts to the aircraft. Download the Software as per the instructions in the service bulletin. This is constrained by geographies and authorized maintainers. | Maintenance node takes care of securely loading of LSAPs. The successful completion of this task is endorsed by the participating nodes in the network. |
| Onboard Manual Inspections which requires authorized/certified and independent inspection. Authorized Maintainers verify if the software parts has been upgraded authorized for the specified aircraft. This is constrained by geographies and authorized maintainers, where different laws applies. | This step is not required. Endorsements by the participating nodes ensure the verification. |
| Maintaining consistent tamper proof Aircraft records updates for the entire life cycle of the aircraft. Most commonly manual updates to the paper records is used. Managing consistently the integrity of the records without losing these for long durations is a problem. | Auto generated digital distributed ledger. Collaboration without compromising on proprietary systems |

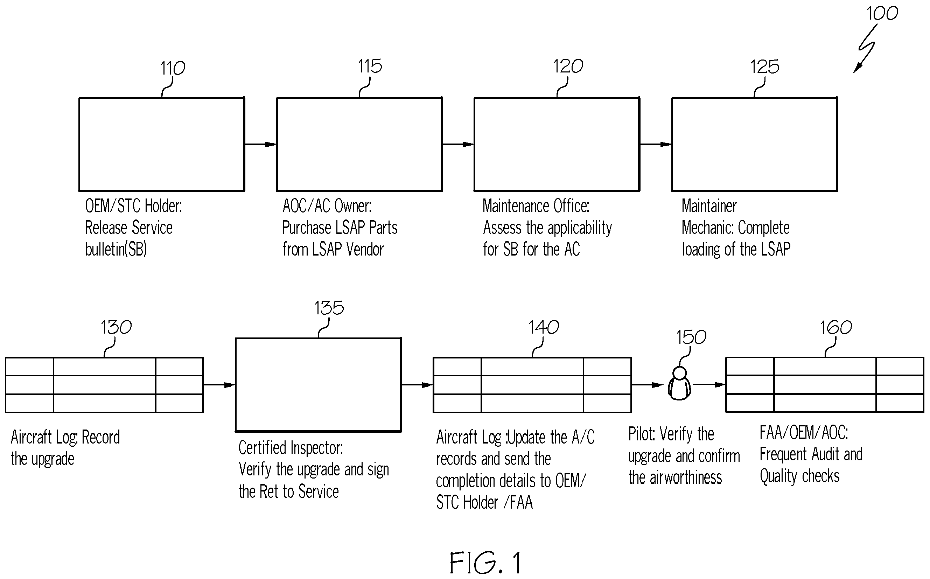

FIG. 1 illustrates an exemplary LSAP loading diagram 100 of the orchestrating approved software loading procedure activities for generating data of the blockchain ledger of the LSAP blockchain network in accordance with an embodiment.

The LSAP loading diagram 100 receives the original equipment manufacturer (OEM)/supplemental type certificate (STC) release service bulletins that instigates the process of loading and installing the LSAPs at 110. The service bulletins include the following information: the aircraft and hardware applicability, the verification procedures to assure that the software were correctly loaded into an approved and compatible target computers; any post load verification and/or test procedures required to show compliance with the guidelines specified in this section of the Certification Memorandum; the actions to be taken in the event of an unsuccessful load (for example, to prohibit the dispatch of the aircraft); the reference to an approved loading procedure; the maintenance record entry procedures required to maintain configuration control; and the reference to the Aircraft Flight Manual or Operations Manual of the aircraft, as appropriate.

Alternately, the OEM or Vendors may notify operators of the Software upgrades through one of several other instruments, aside from Service Bulletins (SB), these notifications may come from instruments that include engineering orders, service letters (SL), vendor notifications and OEM specific communications. The air operator certificate (AOC)/Owner at 115 after the notification from the information of the service bulletin, may order both the software and hardware part numbers that stipulate which software update is to be loaded into the loadable software parts and loadable hardware (LRU). At 120, the maintenance office may assess the applicability for the SB for the air certificate (AC). Next, at 130 the aircraft log records the upgrade. Here, inadequate records have been a constant problem identified by FAA resulting in operators spending substantial money to keep the records up to date. Like any parts on the aircraft, records have to be maintained for LSAP installation to meet the stringent safety requirements imposed in the industry.

The records are needed to match the actual aircraft configuration and there should be no discernable configuration discrepancies to ensure the operator will get the necessary AC without obstacles. At 135, the certified inspector(s) may verify the upgrade and sign the return to service notice. In order to mitigate risk to network security of the onboard systems of the aircraft, the off-airport supporting infrastructure and links in between must include wired and wireless connectivity to ensure no public or unauthorized access. This ensures that data security protection is sufficient to prevent access by unauthorized devices or personnel external to the aircraft. Additionally, the wired and wireless connected pipeline ensures that security threats specific to the certificate holder's operations are identified and assessed, and that risk mitigation strategies are implemented to ensure the continued airworthiness of the aircraft. That is, steps are taken to prevent inadvertent or malicious changes to the aircraft network, including those possibly caused by maintenance activity. Also, unauthorized access from sources onboard the aircraft is also prevented by this wired and wireless connected architecture. Next, at 150, the pilot verifies the upgrade and confirms airworthiness. Finally, at 160 the FAA/OEM/AC frequently audit and quality check the records to ensure that the aircraft meets the proper requirements.

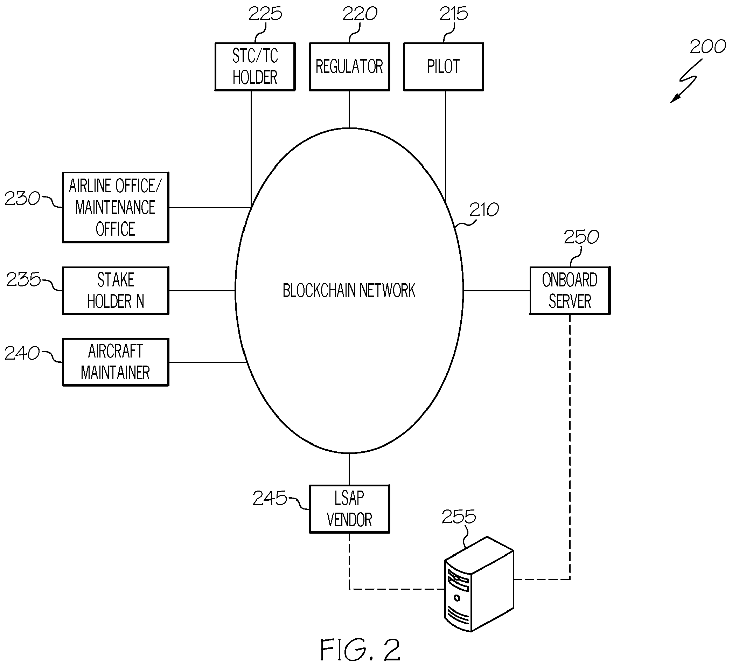

FIG. 2 illustrates a LSAP distribution and loading network diagram 200 of the orchestrating activities of multiple organizations for generating data of the blockchain ledger of the LSAP blockchain network in accordance with an embodiment.

Each organization in the network will have one or more specific roles in the network to receive the record data into the network, validating the record data and generating data blocks of static data in the block chain ledger. In instances, the stakeholders 235 may have rights to modify and generate the underlying roles and trusted work-flow contracts of the blockchain network. The aircraft system 250 from the aircraft may broadcast a current configuration of the aircraft upon request from any number of parties having access to the network or a particular party with limited access for a given maintenance task. The authorized maintainer 240 may as an example initiate a particular LSAP installation and when completed issue the return to service approval. After the return to service approval is issues, a regulator 220 may be given rights to either approve or reject the transactions based on normal weightage calculations. Next, an aircraft operator 230, in instances of a necessitated higher approval may then have to approve or reject the transactions based on a highest weightage. In other words, a two-step weightage is implemented, where at a lower weightage no aircraft operator 230 input is required for approval or rejection and the decision making is given to the regulator 220 who is likely an inspector on the ground. In instances, an LSAP supplier 245 is allowed limited rights to approve or reject a transaction related to the particular LSAP loaded. The STC/TC Owner 225 can deploy the SB as a smart contract in the network and approve or reject the transactions. In various exemplary embodiments, the LSAP distribution server 255 may distribute to other aircrafts similar or duplicate software updates, LSAP loading procedures, and like information as well as corresponding approval data. In instance, the LSAP distribution server 255 may distribute such information outside the blockchain network to various individuals and organizations as needed. The record viewer 215 (Pilot, Airlines Office, Lease assessment, etc.), Stake holders 235 are associated with clients and nodes who have proprietary approval in the network.

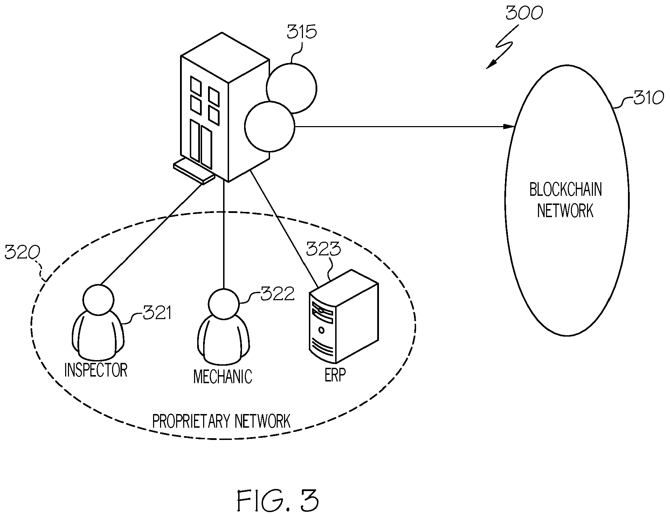

FIG. 3 illustrates a LSAP loading network with deployable trust-flow contract 300 of the orchestrating activities of intra organizations for generating data of the blockchain ledger of the LSAP blockchain network in accordance with an embodiment.

Each organization on the blockchain BC network may have a proprietary network 320 linked to a respective participating node. For example, an inspector 321 with a mechanic 322 and enterprise resource planning (ERP) 323 may form a proprietary network 320 for connecting via the LSAP network 315 to the blockchain network 315. The logic endorse any transaction by an organization can be aided by the linked proprietary system. For example, when a LSAP load request is received on the network, the LSAP vendor organization may reject this request based on the vendor LSAP systems input. In an exemplary embodiment, the reason for such a rejection may be that the maintenance manager has not yet purchased the required LSAP license.

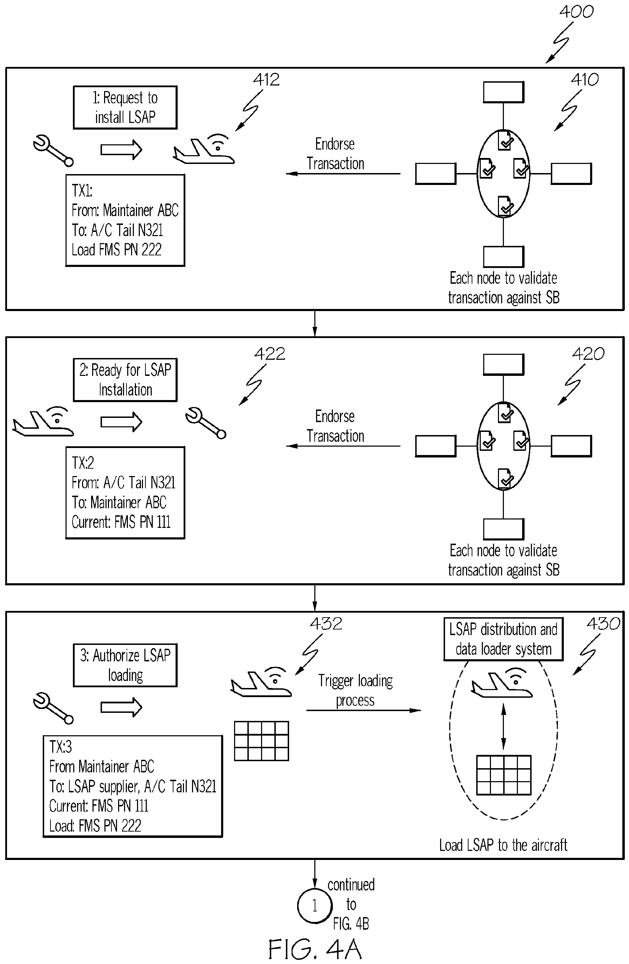

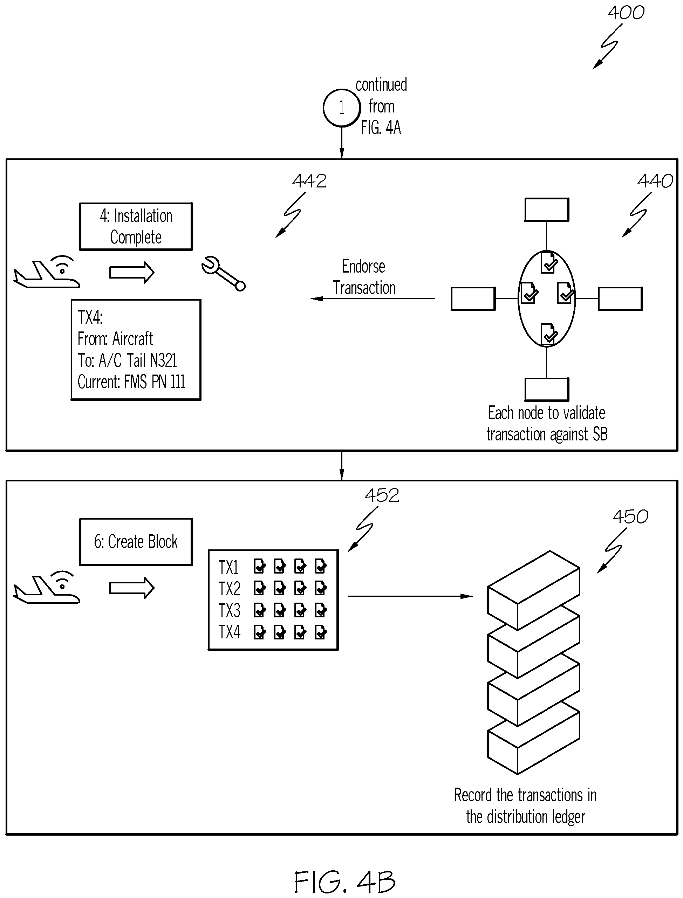

FIGS.4A and 4B illustrate a LSAP loading network with deployable trust-flow contract 400 of the orchestrating activities of multiple organizations for generating data of the blockchain ledger of the LSAP blockchain network in accordance with an embodiment.

FIGS. 4A and 4B. Shows a work flow diagram 400 of configurable set of network rules implemented with deployable trusted workflow contracts. The workflow is contracted via agreements with the organizations of the block chain network and derived from Service bulletins or equivalent instruments. The smart contracts are defined and developed in compliance with regulatory requirements. The smart contracts may contain various sections of rules such as the following: rules to assess applicability of parts for aircraft and specific hardware; rules to verify whether the software was correctly loaded into an approved and compatible target computer, and rules for post load verification and/or test procedures required to show compliance with the guidelines specified, for example by a certification memorandum or like reference. The references may cover an approved LSAP loading procedure used or described with an Aircraft Flight Manual or Operations Manual of the aircraft, as appropriate for the particular maintenance.

The Task Transactions based on workflow contracts will ensure the secure loading of LSAPs from a remote system. The various sub-tasks for the automated remote loading process are described in FIG. 4. The work flow diagram 400 includes the list of tasks but it is contemplated that the particular list of tasks can be changed, modified or omitted as needed and the particular list described here is merely an exemplary list of tasks for a particular block chain network configuration. The work flow diagram 400 includes: a task 410 to request to install an LSAP; a task 420 to ready the network for the LSAP installation; a task 430 to authorize an LSAP loading; a task 440 to complete the installation; and a task 450 to create the block in the block chain network.

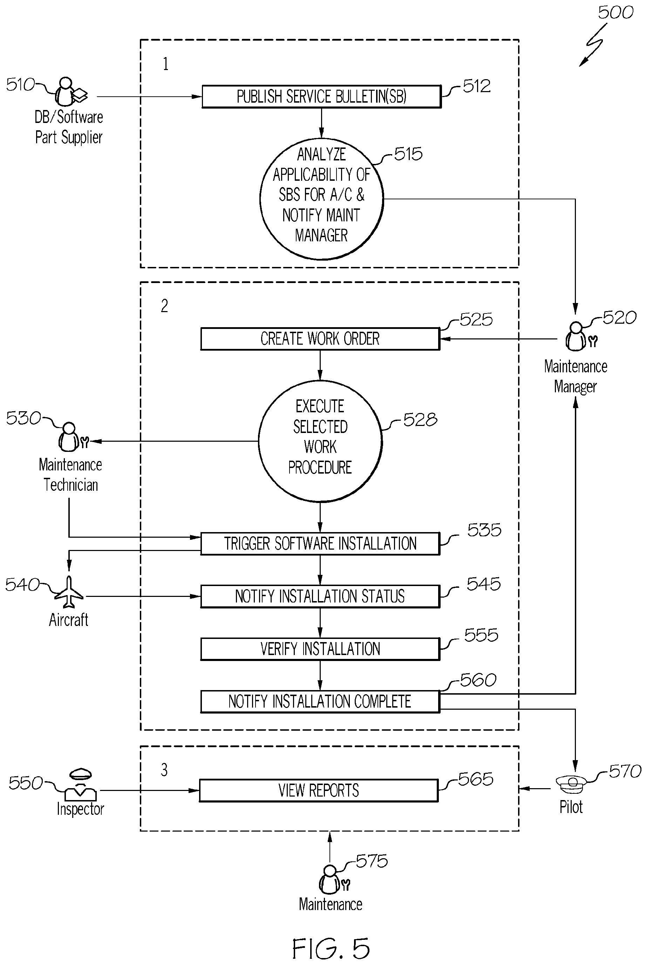

FIG. 5 illustrates a LSAP loading network with a semi-automated installation procedure 500 of the orchestrating activities of multiple organizations for generating data of the blockchain ledger of the LSAP blockchain network in accordance with an embodiment. The semi-automated installation procedure 500 begins with the LSAP software parts installer 510 publishing the service bulletin 512 for review and applicability as well as notification to the maintenance manager 515. At 520, the maintenance manager creates the work order 525 for the LSAP module installation and a selected work procedure 528 is executed for the maintenance technician 530. The maintenance technician 530 needs to trigger the software installation 530 at the aircraft 540. The aircraft 540 notifies the maintenance technician 530 of the status of the installation. At 555, a verification of the installation is determined by the inspector 550 and at 560, a notification is sent that the installation is complete to the maintenance manager 520, the pilot 570 and the inspector 550 views the report 565 generated by the maintenance technician 575 of the installation.

In various exemplary embodiments, the blockchain ledger (not shown) may receive records of the service bulletin, the installation procedure, the installation status and the reports by the maintenance technician when completed. That is, in the semi-automated installation procedure 500, software calls may be configured for sending various steps in the process for recordation in record blocks which make up the blockchain ledger to retain a permanent record of all activities in the semi-automated LSAP installation procedure of software module updates.

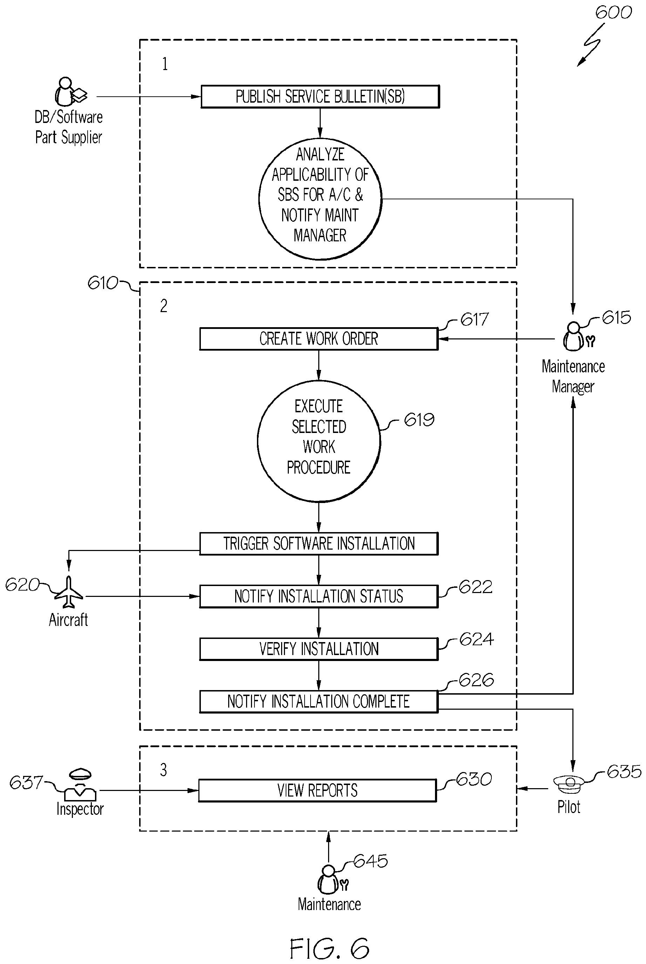

FIG. 6 illustrates a LSAP loading network with an automated installation procedure 600 of the orchestrating activities of multiple organizations for generating data of the blockchain ledger of the LSAP blockchain network in accordance with an embodiment. The automated installation procedure 600 differs from the semi-automated procedure in that the technician no longer triggers the software installation procedure. Rather when the maintenance manager 615 creates the work order 617, the selected work procedures 619 are automatically executed. Once automatically triggered, the software modules or updates are installed on the aircraft 620 which in turn notifies the status of the installation at 622, verifies the installation at 624, and notifies completion of the installation at 626. The report 630 created by the maintenance technician 645 can be viewed by the inspector 637 and the pilot 635. That is, once the installation is complete at 626, the pilot knows to look for the report 630 by the maintenance technician 645 of the installation and the inspection by the inspector 637.

As similarly indicated in the semi-automated installation procedure 500 above, in the automated installation procedure 600 in various exemplary embodiments, the blockchain ledger (not shown) may receive records of the service bulletin, the installation procedure, the installation status and the reports by the maintenance technician when completed. That is, in like the semi-automated installation procedure 500, software calls may be configured in the automated installation procedure 600 for sending various steps in the process for recordation in record blocks which make up the blockchain ledger to retain a permanent record of all activities in the automated LSAP installation procedure of software module updates as needed. However, in the automated installation procedure 600 less recordation may be necessary as certain steps may be implicitly assumed (depending on the programming and configuration of the procedure) because such steps are automated in the installation procedure and therefore may not needed to be verified of completion and likewise recorded in the blockchain ledger.

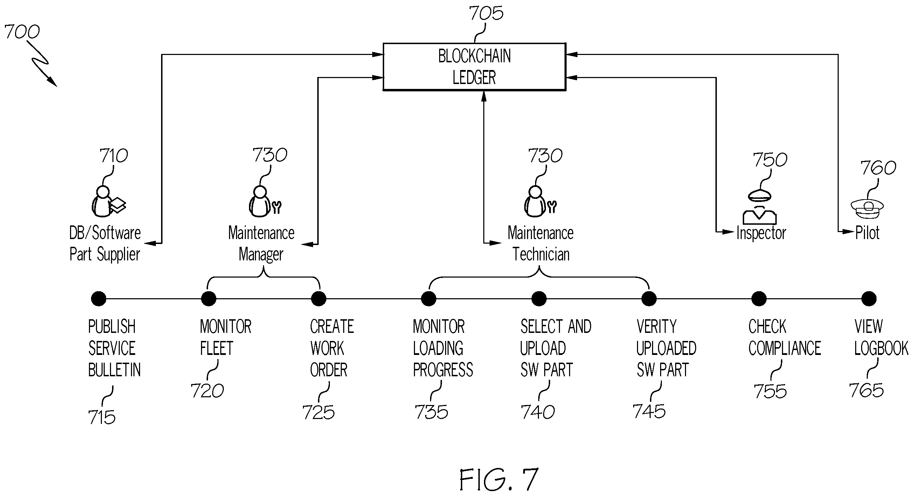

FIG. 7 illustrates a pipeline installation procedure 700 of the orchestrating activities of multiple organizations for generating data of the blockchain ledger of the LSAP blockchain network in accordance with an embodiment.

The pipeline installation procedure 700 which incorporates the semi-automated installation procedure 500 of FIG. 5 and the automated installation procedure 600 of FIG. 6. The pipeline installation procedure 700 begins with software parts supplier 710 publishing the service bulletin 715 which is received by the maintenance manager 730 that monitors the fleet of aircrafts 720 and creates the work order 725 for the particular aircraft. The service bulletin 715 and the work order 725 may be sent to the blockchain ledger 705 for permanently storing. Next, the maintenance technician 730 monitors the progress 735, selects the software part 740, and verifies the software part 745 for the LSAP loading procedure. Routines may be configured in the pipeline for sending the data as well as the status to the blockchain ledger 705. In addition, for all the steps, meta data may also be recorded in the records of the block of the blockchain ledger 705. Finally, the inspector 750 checks for compliance 755 and a log book is created 765 which may be viewed by the pilot 760.

In various embodiments, records of the data may be stored in the blocks of the blockchain ledger including times, dates, verification, validation, and completion of the software module installations and updates in each step of the pipeline installation procedure 700 for future review, searching and compliance data that the service bulletins have been received, the appropriate aircrafts identified and installations of the software validated and properly completed.

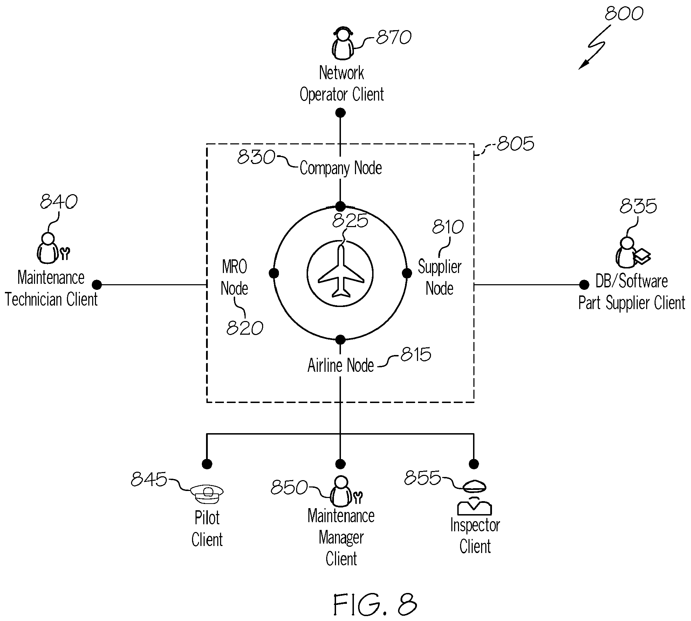

FIG. 8 illustrates an LSAP loading architecture diagram 800 of the parties and organizations orchestrating activities for generating data of the blockchain ledger of the LSAP blockchain network in accordance with an embodiment. The LSAP loading architecture diagram 800 includes a set of nodes 805 for each organization or stakeholder that takes part in the trusted workflow contracts of the blockchain network. The set of nodes 805 may be configured as remote servers coupled to client devices of the respective clients of the blockchain network. Each node may be assigned a set of rights for notification, searching and validating of input to the blockchain defined by the set of trusted workflow contracts. The sets of nodes 805 includes a company node 807, an aircraft node 825, an Maintenance, Repair and Overhaul (MRO) node 820, an airline node 815 and a supplier node 810. In the distributed network architecture, each node will have a duplicate set of records that are updated at similar if not the same time as the other nodes allowing for each of the respective parties to rely on the same information. The set of clients includes the network operator 830, the maintenance technician 840, the software part supplier 835, the pilot 845, the maintenance manager 850, and the inspector 855. Each client can be configured to be enabled for certain tasks aligned with the client role in the pipeline processing and given access to other data or proprietary decisions made can be limited.

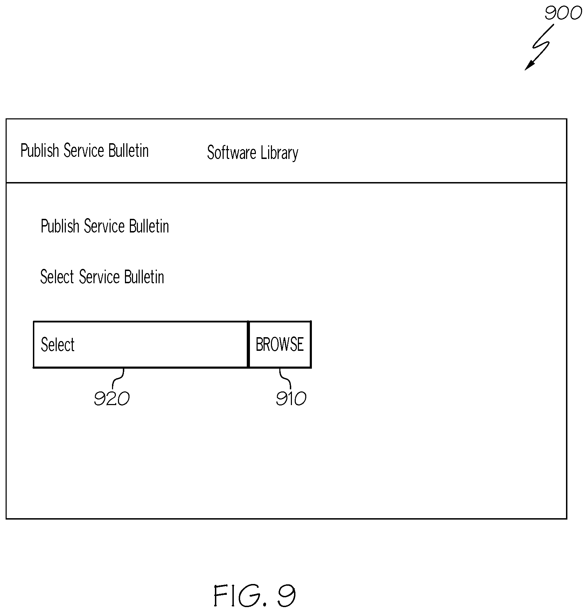

FIG. 9 illustrates a snapshot of an user interface 900 of a service bulletin for sending to the parties and organizations orchestrating activities for generating data of the blockchain ledger of the LSAP blockchain network in accordance with an embodiment.

The user interface 900 is configured to enable an user to browse via a browse button 910 and select 920 a particular service bulletin for sending out to the aircraft fleet.

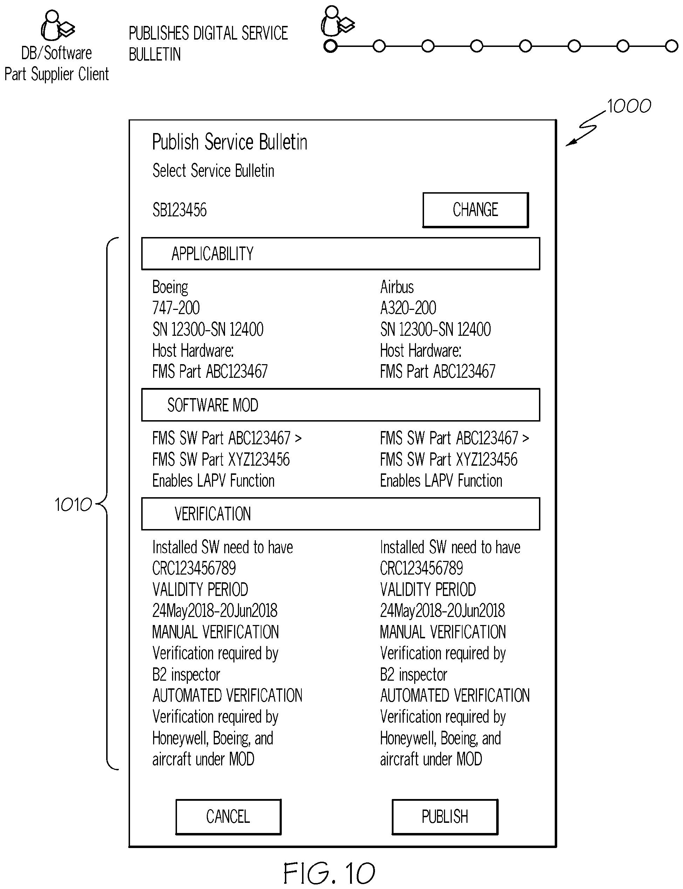

FIG. 10 illustrates a snapshot of a service bulletin 1000 for sending to the parties and organizations orchestrating activities for generating data of the blockchain ledger of the LSAP blockchain network in accordance with an embodiment.

The published service bulletin 1010 includes information for the LSAP loading of the aircraft identifying type, the software module and the verification procedure. In various exemplary embodiments, the published service bulleting 1010 may be recorded in the blockchain ledger including all metadata of the parties sending the service bulletin and receiving parties.

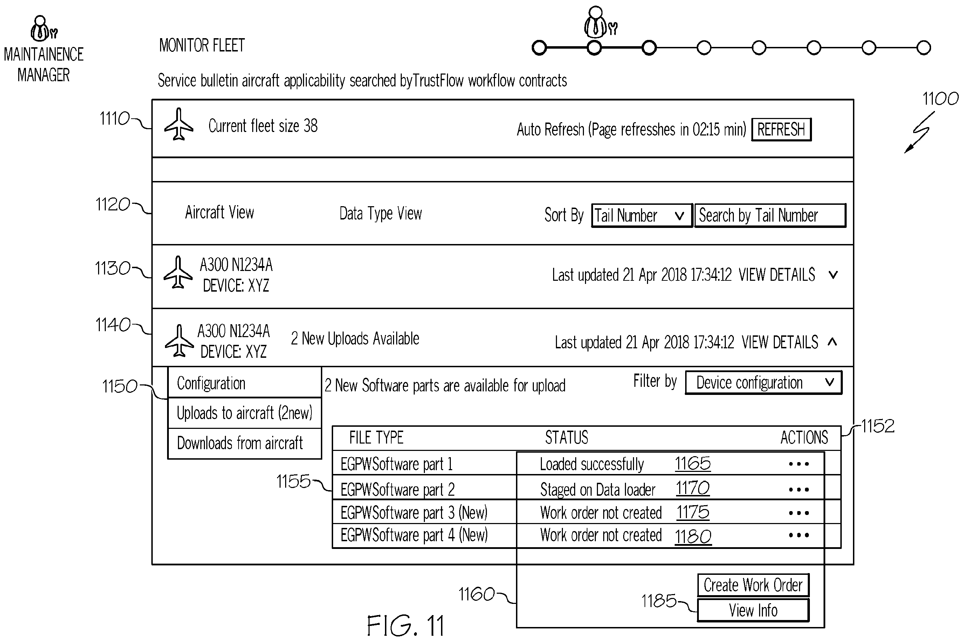

FIG. 11 illustrates a snapshot of an user interface 1100 of the service bulletin applicability for sending to the parties and organizations orchestrating activities for generating data of the blockchain ledger of the LSAP blockchain network in accordance with an embodiment.

The user interface 1100 includes the current fleet size 1110 which is being monitored, the selected aircraft 1120, the details of the last update 1130 and availability of new updates 1140 and configurations of the updates 1150. The software and actions for an update in the device configuration window 1152 described in a particular configuration the kind of available, status, verification and validation data that may be sent to the blockchain ledger at 1160.

In an exemplary embodiment, a work order may be created at 1185, and displays of notifications of work order not created 1180, work order created 1175, staged on loader 1170 and loaded successfully 1165 may be stored in the blockchain ledger and displayed to the inspector, pilot, maintenance technician etc.. In addition, each of the parties or organizations responsible for the creation of the trust-flow contracts may have access to this type of information depending on the blockchain network configuration.

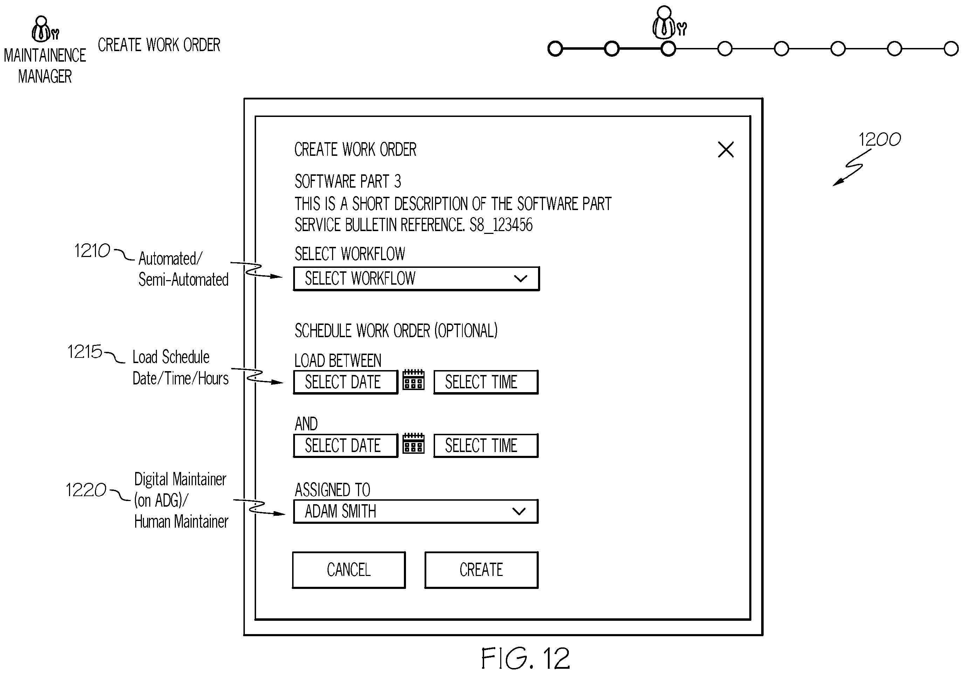

FIG. 12 illustrates a snapshot of an user interface 1200 of the maintenance manager for creating the work order for sending to the parties and organizations of orchestrating activities for generating data of the blockchain ledger of the LSAP blockchain network in accordance with an embodiment.

FIG. 12 shows the user interface 1200 for creating the work order where an user may select 1210 an automated or semi-automated work flow. In addition, the user may load the schedule at 1215 and choose data, time and hours. The digital maintainer 1220 enables the selection of the maintenance technician or responsible party assigned by the maintenance manager.

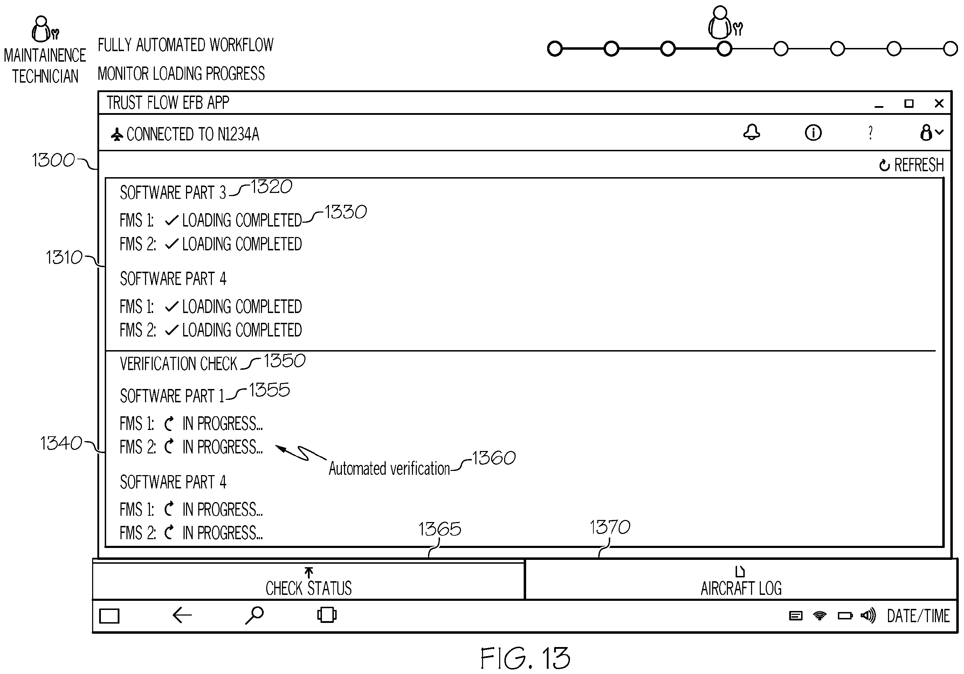

FIG. 13 illustrates a snapshot of an user interface 1300 of the maintenance manager for monitoring the load progress and for sending to the parties and organizations orchestrating activities for generating data of the blockchain ledger of the LSAP blockchain network in accordance with an embodiment.

The user interface 1300 includes notification of loading the software 1310 and the verification check 1340. The loading of the software 1310 includes identification of a software part 1320 and notification of the completed loading 1330. The verification check 1340 includes the verifying at 1350 of the software part 1355 "in progress" where the verification is automated 1360. The tabs at the bottom of the user interface 1300 allow of user selection of the check status 1365 and selection of the aircraft log 1370 indicating visually to the user that the loading and verification steps have been logged in the aircraft log for the particular aircraft.

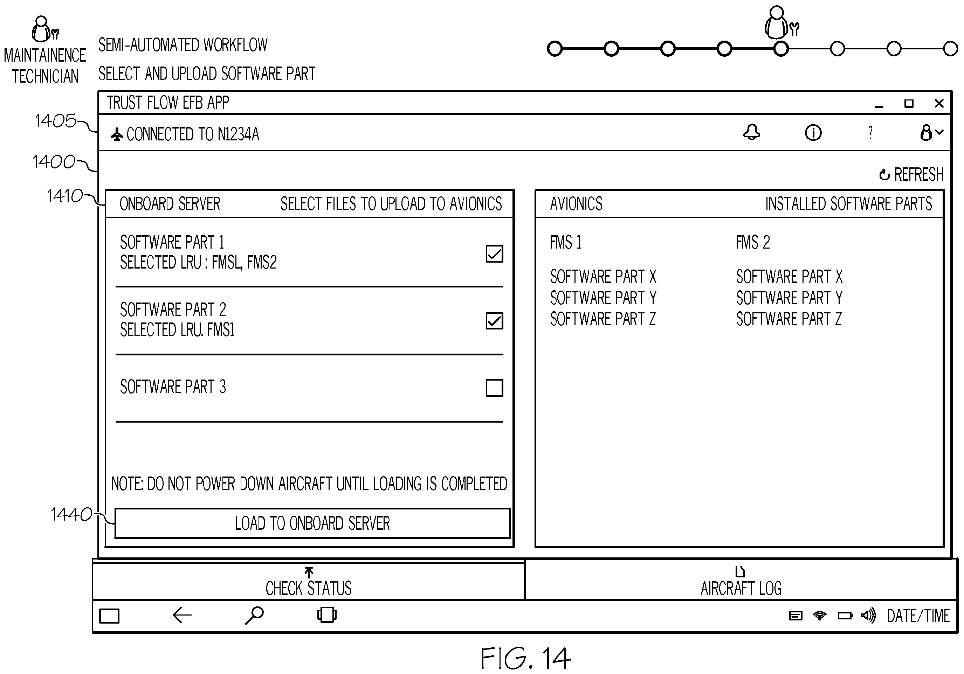

FIG. 14 illustrates a snapshot of an user interface 1400 of the maintenance technician for selecting and uploading the software part and, in instances, for sending to the parties and organizations orchestrating activities for generating data of the blockchain ledger of the LSAP blockchain network in accordance with an embodiment.

The user interface 1400 includes notification of connected to a particular aircraft 1405, the software part 1410 selected for uploading, and a "button" for user selection to execute the upload of the software part.

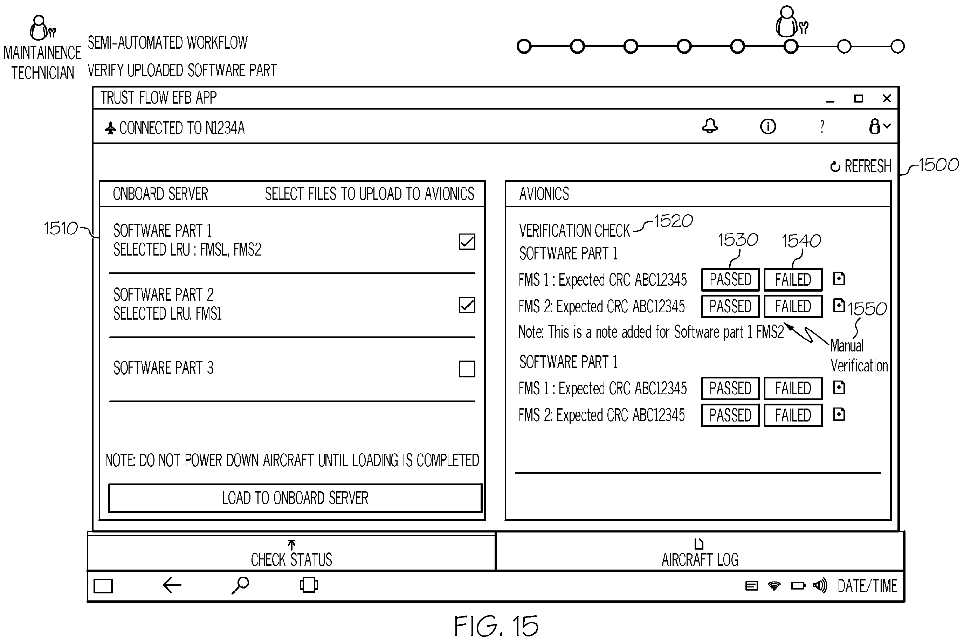

FIG. 15 illustrates a snapshot of an user interface 1500 of the maintenance technician for verifying the uploading of the software part and, in instances, for sending to the parties and organizations orchestrating activities for generating data of the blockchain ledger of the LSAP blockchain network in accordance with an embodiment.

The user interface 1500 indicates the software part 1500 and the verification check 1520 for review by the maintenance technician where a determination can be made that the software has passed 1530 or not passed 1540 the verification test. In instances, the verification may be automated or manually applied 1550 by the technician.

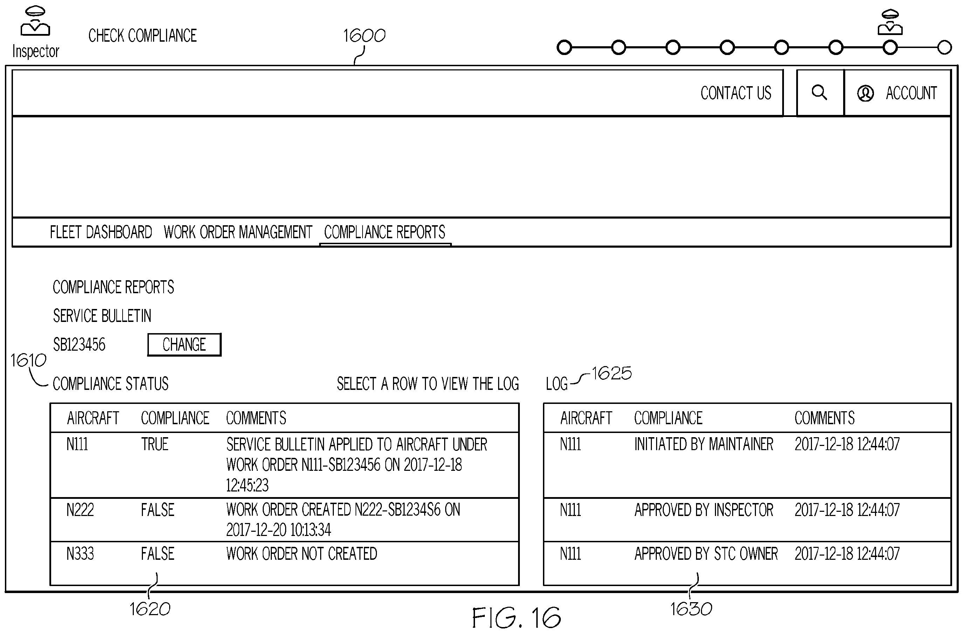

FIG. 16 illustrates a snapshot of an user interface 1600 of the inspector checking compliance of the software part and, in instances, for sending to the parties and organizations orchestrating activities for generating data of the blockchain ledger of the LSAP blockchain network in accordance with an embodiment. The compliance status 1610 by the inspector can be designated at 1620 either "true" or "false" for a particular aircraft. The log 1625 of the aircraft can show whether the status check 1630 was initiated by the maintainer and approved by the inspector or the STC owner.

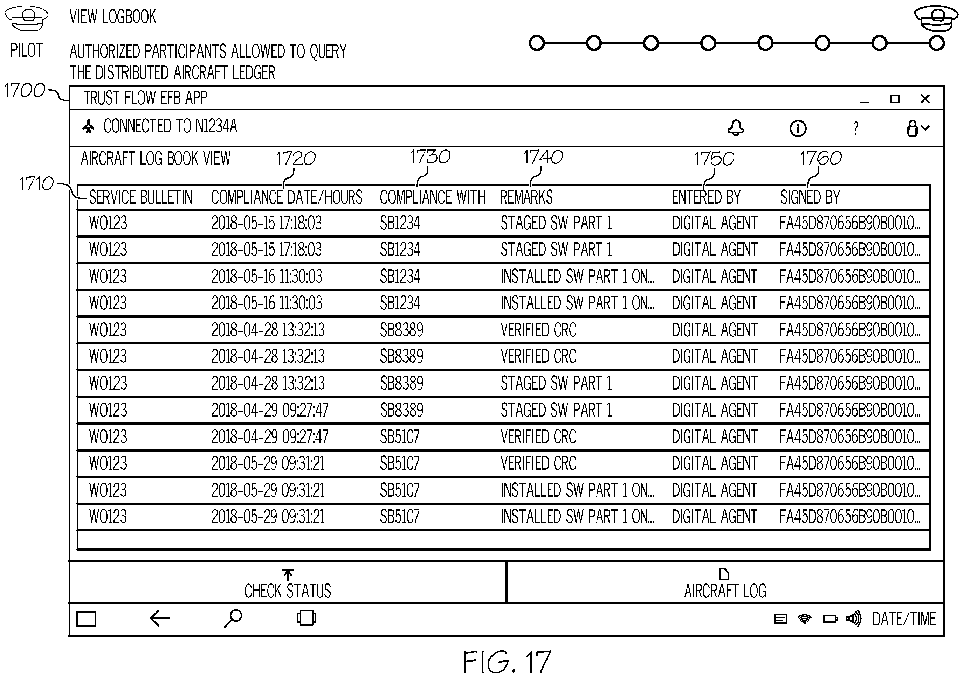

FIG. 17 illustrates a snapshot of an user interface 1700 of the pilot viewing the log of the software part installed on the aircraft related to the orchestrated activities for generating data of the LSAP blockchain network in accordance with an embodiment.

The user interface 1700 shows a view of the log book which includes views of service bulleting id 1710, the compliance data/hours 1720, the module in compliance with 1730, any remarks 1740, who entered the remarks 1750 and the who signed 1760 the software update (i.e. who validated the software update).

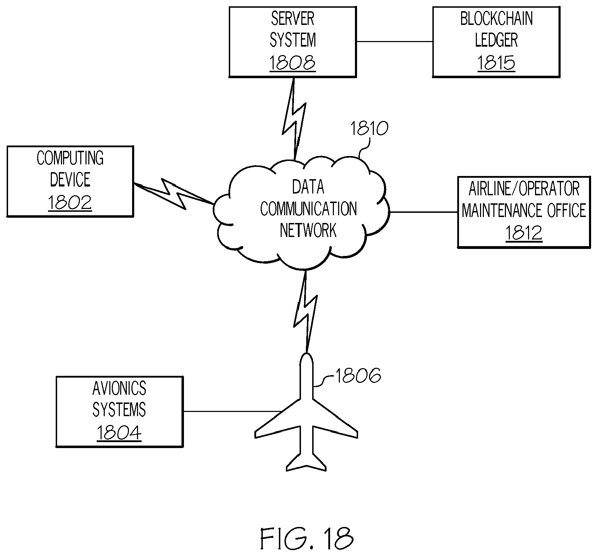

FIG. 18 is a network diagram 1800 of the blockchain ledger with the communication network aircraft related to the orchestrated activities for generating data of the LSAP blockchain network in accordance with an embodiment.

The network diagram 1800 includes the server system 1808 which, in instances, may include several server farms having blockchain ledgers 1815 enabling access of the data by multiple parties. The aircraft 1806 in communication via a data communication network 1810 with the server system 1808, the operator maintenance office 1812 and a computing device 1802 providing client access.

The computing device 1802 may be implemented by any computing device that includes at least one processor, some form of memory hardware, a user interface, and communication hardware. For example, the computing device 1802 may be implemented using a personal computing device, such as a tablet computer, a laptop computer, a personal digital assistant (PDA), a smartphone, or the like. In this scenario, the computing device 1802 is capable of storing, maintaining, and executing an blockchain network applications associated with activities of clients and organizations for loading LSAP software updates with the aircraft 1806 systems.

The aircraft 1806 may be any aviation vehicle for which LSAP updates are applicable in response to service notice bulletins. The aircraft 1806 may be implemented as an airplane, helicopter, spacecraft, hovercraft, unmanned air vehicle, or the like. The one or more avionics systems 1804 may include any system capable of receiving software updates via the communication systems of the aircraft.

The server system 1808 may include any number of application servers, and each server may be implemented using any suitable computer. In some embodiments, the server system 1808 includes one or more dedicated computers. In some embodiments, the server system 1808 includes one or more computers carrying out other functionality in addition to server operations. The server system 1808 may store and provide any type of executable applications and data that is compatible with the computing device 1802 and is related to the updating of software updates as required by service bulletins for maintenance service of an aircraft. In addition, the server system 1808 may store rules, procedures, requests etc... associated with entities of various nodes in the blockchain network for managing clients at the computing device 1802.

The computing device 1802 is usually located with the maintenance technician or onboard the aircraft 1806, and the computing device 1802 communicates with the one or more avionics systems on the aircraft 1806 via wired and/or wireless communication connection. The computing device 1802 and the server system 1808 are generally disparately located, and the computing device 1802 communicates with the server system 1808 via the data communication network 1810 and/or via communication mechanisms onboard the aircraft 1806.

The data communication network 1810 may be any digital or other communications network capable of transmitting messages or data between devices, systems, or components. In certain embodiments, the data communication network 1810 includes a packet switched network that facilitates packet-based data communication, addressing, and data routing. The packet switched network could be, for example, a wide area network, the Internet, or the like. In various embodiments, the data communication network 1810 includes any number of public or private data connections, links or network connections supporting any number of communications protocols. The data communication network 1810 may include the Internet, for example, or any other network based upon TCP/IP or other conventional protocols. In various embodiments, the data communication network 1810 could also incorporate a wireless and/or wired telephone network, such as a cellular communications network for communicating with mobile phones, personal digital assistants, and/or the like. The data communication network 1810 may also incorporate any sort of wireless or wired local and/or personal area networks, such as one or more IEEE 802.3, IEEE 802.16, and/or IEEE 802.11 networks, and/or networks that implement a short range (e.g., Bluetooth) protocol. For the sake of brevity, conventional techniques related to data transmission, signaling, network control, and other functional aspects of the systems (and the individual operating components of the systems) may not be described in detail herein.

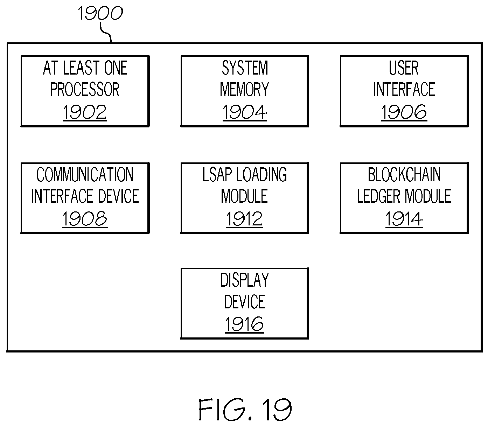

FIG. 19 is a functional block diagram of a computing device related to the orchestrated activities for generating data of the LSAP blockchain network in accordance with an embodiment. It should be noted that the computing device 1900 can be implemented with the computing device 1802 depicted in FIG. 18. In this regard, the computing device 1900 shows certain elements and components of the computing device 1802 in more detail.

The computing device 1900 generally includes, without limitation: at least one processor 1902; system memory 1904; a user interface 1906; a communication interface device 1908; LSAP loading module 1912; a blockchain ledger module 1914 and a display device 1916. These elements and features of the computing device 1900 may be operatively associated with one another, coupled to one another, or otherwise configured to cooperate with one another as needed to support the desired functionality- in particular, the distributed ledger is used to obtain the digital service record into a first block of the blockchain ledger in the blockchain ledger module 1914 and to initiate at least one loading and installing activity performed upon the software embedded in the aircraft to effect updating using the distributable software code and to insert into the distributed ledger of the blockchain ledger module 1914 of a second block of the blockchain storing a record of loading and installing activity by the LSAP loading module 1912 is performed.

For ease of illustration and clarity, the various physical, electrical, and logical couplings and interconnections for these elements and features are not depicted in FIG. 19. Moreover, it should be appreciated that embodiments of the computing device 1900 will include other elements, modules, and features that cooperate to support the desired functionality. For simplicity, FIG. 19 only depicts certain elements that relate to the techniques described in more detail below.

The at least one processor 1902 may be implemented or performed with one or more general purpose processors, a content addressable memory, a digital signal processor, an application specific integrated circuit, a field programmable gate array, any suitable programmable logic device, discrete gate or transistor logic, discrete hardware components, or any combination designed to perform the functions described here. In particular, the at least one processor 1902 may be realized as one or more microprocessors, controllers, microcontrollers, or state machines. Moreover, the at least one processor 1902 may be implemented as a combination of computing devices, e.g., a combination of digital signal processors and microprocessors, a plurality of microprocessors, one or more microprocessors in conjunction with a digital signal processor core, or any other such configuration.

The at least one processor 1902 is communicatively coupled to the system memory 1904. The system memory 1904 is configured to store any obtained or generated data associated with blockchain ledger of the blockchain ledger module 1914. The system memory 1904 may be realized using any number of devices, components, or modules, as appropriate to the embodiment. Moreover, the computing device 1900 could include system memory 1904 integrated therein and/or a system memory 1904 operatively coupled thereto, as appropriate to the particular embodiment. In practice, the system memory 1904 could be realized as RAM memory, flash memory, EPROM memory, EEPROM memory, registers, a hard disk, a removable disk, or any other form of storage medium known in the art.

The user interface 1906 may include or cooperate with various features to allow a user to interact with the computing device 1900. Accordingly, the user interface 1906 may include various human-to-machine interfaces, e.g., a keypad, keys, a keyboard, buttons, switches, knobs, a touchpad, a joystick, a pointing device, a virtual writing tablet, a touch screen, a microphone, or any device, component, or function that enables the user to select options, input information, or otherwise control the operation of the computing device 1900.

In certain embodiments, the user interface 1906 may include or cooperate with various features to allow a user to interact with the computing device 1900 via graphical elements rendered on a display element (e.g., the display device 1916). Accordingly, the user interface 1906 may initiate the creation, maintenance, and presentation of a graphical user interface (GUI). In certain embodiments, the display device 1916 implements touch-sensitive technology for purposes of interacting with the GUI. Thus, a user can manipulate the GUI by moving a cursor symbol rendered on the display device 1916, or by physically interacting with the display device 1916 itself for recognition and interpretation, via the user interface 1906.

The communication interface device 1908 is suitably configured to communicate data between the computing device 1900 and one or more remote servers and one or more avionics systems onboard an aircraft. The communication interface device 1908 may transmit and receive communications over a wireless local area network (WLAN), the Internet, a satellite uplink/downlink, a cellular network, a broadband network, a wide area network, or the like. As described in more detail below, data received by the communication interface device 1908 may include, without limitation: data of the orchestrated activities by maintenance technician from issued service bulletins in clients per the rules formed by trusted workflow contracts of entities associated with nodes in servers in the blockchain network.

In various exemplary embodiments, each of the tasks is initiated by an automated agent/manual process in the network as transactions. The transactions associated with each task are verified by the contract rules which are in turn endorsing or validated by nodes in the network. Upon endorsement, each tasks or sets of task configures a block which is recorded as an immutable record in the body of the block of the block chain. An automated tamper proof records generation results in which every transaction in the network is recorded in the distributed ledger of the block chain. The ledger resides as the official maintenance record for a particular aircraft. The application software of any node in the network may depending on rights given enable a viewing of the records. In an exemplary embodiment, an inspector the FAA can perform a remote audit of the maintenance records by accessing the blockchain ledger associated with the particular aircraft without visiting the maintenance facility, and without having to inspect the aircraft in person to validate the accuracy of the record in the ledger.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

The following description refers to elements or nodes or features being "connected" or "coupled" together. As used herein, unless expressly stated otherwise, "coupled" means that one element/node/feature is directly or indirectly joined to (or directly or indirectly communicates with) another element/node/feature, and not necessarily mechanically. Likewise, unless expressly stated otherwise, "connected" means that one element/node/feature is directly joined to (or directly communicates with) another element/node/feature, and not necessarily mechanically. Thus, although the schematic shown depicts one exemplary arrangement of elements, additional intervening elements, devices, features, or components may be present in an embodiment of the depicted subject matter.

For the sake of brevity, conventional techniques related to signal processing, data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Some of the functional units described in this specification have been referred to as "modules" in order to more particularly emphasize their implementation independence. For example, functionality referred to herein as a module may be implemented wholly, or partially, as a hardware circuit include custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, include one or more physical or logical modules of computer instructions that may, for instance, be organized as an object, procedure, or function. Nevertheless, the executables of an identified module need not be physically located together, but may include disparate instructions stored in different locations that, when joined logically together, include the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A computer-implemented blockchain system for remotely distributing, updating and verifying the installation of software embedded in an aircraft and for creating a built-in blockchain record of distributing, updating and verifying activities as proofs, comprising:
a data communication network having a plurality of nodes each node implemented by at least one computer programmed to cooperatively maintain a copy of a distributed ledger organized as a blockchain of linked encrypted record-storing blocks;
at least a first one of said plurality of nodes being programmed to insert into the distributed ledger in a first block of the blockchain storing, as an automated workflow, a service record that contains (a) distributable software code for updating the software embedded in the aircraft, and that specifies (b) rules prescribing activities for loading and installing the software embedded in the aircraft, and (c) rules for verifying that the updated software conforms to a predefined or prescribed standard;
at least a second one of said plurality of nodes being programmed (a) to access the distributed ledger to obtain the service record and to initiate at least one loading and installing activity performed upon the software embedded in the aircraft to effect updating thereof using the distributable software code and (b) to insert into the distributed ledger a second block of the blockchain storing a record of a fact that the at least one loading and installing activity was performed and the success thereof;
at least a third one of said plurality of nodes being programmed (a) to access the distributed ledger to obtain the service record and to apply at least one verifying rule to test whether the updated software conforms to the predefined or prescribed standard and (b) to insert into the distributed ledger a third block of the blockchain storing a service record of the fact that the at least one verifying rule was applied and an outcome thereof; and
at least the first, second and third ones of said plurality of nodes being programmed to collectively share immutable copies of the first, second and third blocks of the blockchain thereby ensuring that the distributed ledger is immutable.

2. The computer-implemented blockchain system of claim 1, wherein the first, second and third nodes together control the installation of the software embedded in the aircraft in a manner to ensure no inadvertent activities are performed.

3. The computer-implemented blockchain system of claim 2, wherein the installation by the first, second and third nodes is controlled by a trusted workflow contract executed by an entity associated with at least one of the first, second or third nodes.

4. The computer-implemented blockchain system of claim 3, wherein the trusted workflow contract comprises: a set of rules for updating the software to:
assess applicability of the software update for a particular aircraft;
validate whether the software update is correctly loaded into the particular aircraft; and
verify whether at a post load completion of the software update, the software complies with an approved software update loading procedure.

5. The computer-implemented blockchain system of claim 4, wherein the nodes are a plurality of entities comprising: a loadable software airplane part (LSAP) supplier, a carrier, a regulator, owner, and an aircraft.

6. The computer-implemented blockchain system of claim 1, further comprising:
at least one activity of a plurality of activities stored in the record of the second block of actions performed by a plurality of clients in a pipeline processing defined by the approved software update loading procedure and associated with the plurality of nodes wherein the plurality of activities performed comprise one or more steps of: publishing a service bulletin, monitoring a fleet of aircrafts, creating a work order, monitoring a software update loading process, selecting and uploading a software update, verifying a software update, checking a compliance and viewing a logbook.

7. The computer-implemented blockchain system of claim 6, wherein the plurality of clients comprise one or more clients of: software part supplier, maintenance manager, maintenance technician, inspector, and a pilot.

8. The computer-implemented blockchain system of claim 7, wherein the one or more clients associated with the activities are remotely located from the entities associated with the nodes.

9. A method for remotely distributing, updating and verifying software updates in an aircraft and for creating a built-in blockchain record of distributing, updating and verifying activities as proofs, the method comprising:
configuring a data communication network having a plurality of nodes each node implemented by at least one computer programmed to cooperatively maintain a copy of a distributed ledger organized as a blockchain of linked encrypted record-storing blocks;
programming at least a first one of said plurality of nodes to insert into the distributed ledger in a first block of the blockchain storing, as an automated workflow, a service record that contains (a) distributable software code for updating the software embedded in the vehicle, and that specifies (b) rules prescribing activities for loading and installing the software embedded in the aircraft, and (c) rules for verifying that the updated software conforms to a predefined or prescribed standard;
programming at least a second one of said plurality of nodes (a) to access the distributed ledger to obtain the service record and to initiate at least one loading and installing activity performed upon the software embedded in the aircraft to effect updating thereof using the distributable software code and (b) to insert into the distributed ledger a second block of the blockchain storing a service record of the fact that the at least one loading and installing activity was performed and the success thereof;
programming at least a third one of said plurality of nodes (a) to access the distributed ledger to obtain the service record and to apply at least one verifying rule to test whether the updated software conforms to the predefined or prescribed standard and (b) to insert into the distributed ledger a third block of the blockchain storing a service record of a fact that the at least one verifying rule was applied and an outcome thereof; and
programming at least the first, second and third ones of said plurality to collectively share immutable copies of the first, second and third blocks of the blockchain thereby ensuring that the distributed ledger is immutable.

10. The method of claim 9 wherein the first, second and third nodes together control the installation of the software embedded in the aircraft in a manner to ensure no inadvertent activities are performed.
